Europäisches Patentamt

European Patent Office

Office européen des brevets

(19)

(11) Numéro de publication : **0 441 683 A1**

(12) # DEMANDE DE BREVET EUROPEEN

(21) Numéro de dépôt : **91400221.7**

(51) Int. Cl.⁵ : **F16L 19/00**

(22) Date de dépôt : **30.01.91**

(30) Priorité : **05.02.90 FR 9001304**

(43) Date de publication de la demande :
**14.08.91 Bulletin 91/33**

(84) Etats contractants désignés :
**DE ES GB IT SE**

(71) Demandeur : **SIMMONDS S.A.**
**5 rue Michelet**
**F-92150 Suresnes (FR)**

(72) Inventeur : **Pouplier, Christian**
**11 avenue de perseigne**
**F-72000 Le Mans (FR)**

(74) Mandataire : **Durand, Yves Armand Louis et al**
**CABINET WEINSTEIN 20, Avenue de**
**Friedland**
**F-75008 Paris (FR)**

(54) **Raccord étanche perfectionné pour conduites de transport d'un fluide quelconque.**

(57)     La présente invention concerne un raccord étanche comprenant deux pièces (1, 3) à extrémités coopérantes conjugées respectivement concave (2) et convexe (4), et réunies par un manchon (5) intérieurement fileté (11) retenant l'une (1) des pièces et serré par vissage sur l'autre pièce (3) au moyen d'une douille (6) extérieurement concentrique au manchon (5) et comportant une denture interne coopérant avec la périphérie externe du manchon (5), cette douille possèdant une longueur telle qu'après vissage du manchon (5) et coulissement axial de la douille (6) sur ce manchon, elle coiffe et vient en prise par sa denture interne sur la périphérie externe de la pièce (3) pour bloquer en rotation cette pièce en même temps que le manchon (5).

Fig. 4

EP 0 441 683 A1

# RACCORD ETANCHE PERFECTIONNE POUR CONDUITES DE TRANSPORT D'UN FLUIDE QUELCONQUE

La présente invention a essentiellement pour objet un raccord étanche perfectionné pour des conduites dans lesquelles peut circuler un fluide quelconque, tel que par exemple du carburant.

On connaît déjà des raccords de conduites comprenant essentiellement deux pièces à extrémités coopérantes conjuguées respectivement convexe et concave, et réunies par un manchon intérieurement fileté retenant l'une des pièces et serré par vissage sur l'autre pièce.

Pour assurer après serrage le blocage des pièces composant le raccord, on utilisait généralement un fil-frein traversant le raccord, mais cela n'était pas sans inconvénients. En effet, lorsque le raccord est sollicité par des vibrations par exemple, le fil-frein peut à la longue se rompre, de sorte que le raccord se desserre. Il engendre par conséquent des fuites, ce qui peut être dangereux et risque de provoquer un incendie, surtout lorsque les conduites transportent un fluide inflammable.

Aussi, la présente invention a pour but de proposer un raccord étanche perfectionné qui remédie aux inconvénients ci-dessus et qui demeure parfaitement étanche et indesserrable à moins d'effectuer une intervention de desserrage sur ledit raccord.

A cet effet, l'invention a pour objet un raccord étanche perfectionné pour conduites de transport d'un fluide quelconque, et du type comprenant deux pièces à extrémités coopérantes conjuguées respectivement convexe et concave, et réunies par un manchon intérieurement fileté retenant l'une des pièces et serré par vissage sur l'autre pièce, caractérisé en ce que ledit manchon est vissé et serré sur l'autre pièce au moyen d'une douille extérieurement concentrique au manchon et comprenant une denture ou analogue interne coopérant avec la périphérie externe du manchon, cette douille possèdant une longueur telle qu'après vissage du manchon et coulissement axial de ladite douille sur le manchon, elle coiffe et vient en prise par sa denture interne sur la périphérie externe de ladite autre pièce pour bloquer en rotation cette autre pièce en même temps que le manchon.

Suivant une autre caractéristique de ce raccord, la périphérie externe du manchon et de l'autre pièce précitée comporte des pans, susceptibles de coopérer avec la denture interne de la douille.

Suivant encore une autre caractéristique de ce raccord, la périphérie externe du manchon comporte une gorge reçevant un jonc ou analogue coopérant avec l'une ou l'autre de deux gorges ménagées dans la périphérie interne de la douille.

On précisera encore ici que l'une des deux gorges ménagées dans la périphérie interne de la douille comporte une partie formant rampe facilitant le passage du jonc dans l'autre gorge lors du coulissement axial de la douille sur le manchon.

Suivant un exemple de réalisation préféré, la douille présente la forme d'un embout de clé double hexagone.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue en perspective en position montée d'un raccord étanche selon cette invention .

La figure 2 est une vue en perspective éclatée de ce raccord .

La figure 3 est une vue en coupe axiale et éclatée dudit raccord .

La figure 4 est une vue en coupe axiale du raccord en position vissée et serrée des pièces qui le composent.

La figure 5 est une vue similaire à la figure 4, mais montrant le raccord en position définitive de blocage en rotation des pièces qui le composent.

Suivant l'exemple de réalisation illustré par les figures, on voit qu'un raccord conforme aux principes de cette invention, comprend essentiellement une première pièce 1 avec extrémité concave 2, une deuxième pièce 3 avec extrémité convexe 4 conjuguée de l'extrémité concave 2 de la pièce 1, un manchon 5 retenant la pièce 1 et vissé sur la pièce 3, et une douille 6 extérieurement concentrique au manchon 5 et permettant le vissage de ce manchon 5 sur la pièce 3 ainsi que le blocage en rotation de cette pièce 3 et du manchon 5 après vissage.

La première pièce 1 comporte une extrémité 1a opposée à son extrémité concave 2 et sur laquelle est fixée, par soudage par exemple, une portion de conduite à raccorder. Cette pièce 1 comporte un épaulement 8 permettant sa retenue dans le manchon 5 qui comporte à cet effet une collerette 9 à l'une de ses extrémités.

La deuxième pièce 3 comporte une extrémité 3a opposée à l'extrémité convexe 4 et sur laquelle est fixée, par exemple soudée, une autre portion de conduite (non représentée) à raccorder.

Cette deuxième pièce 3 comporte un filetage externe 10 pouvant coopérer par vissage avec une partie intérieurement filetée 11 du manchon 5.

Ce manchon 5 comporte, au niveau de la collerette 9, une gorge annulaire 12 dans laquelle est logée un jonc ou analogue 13.

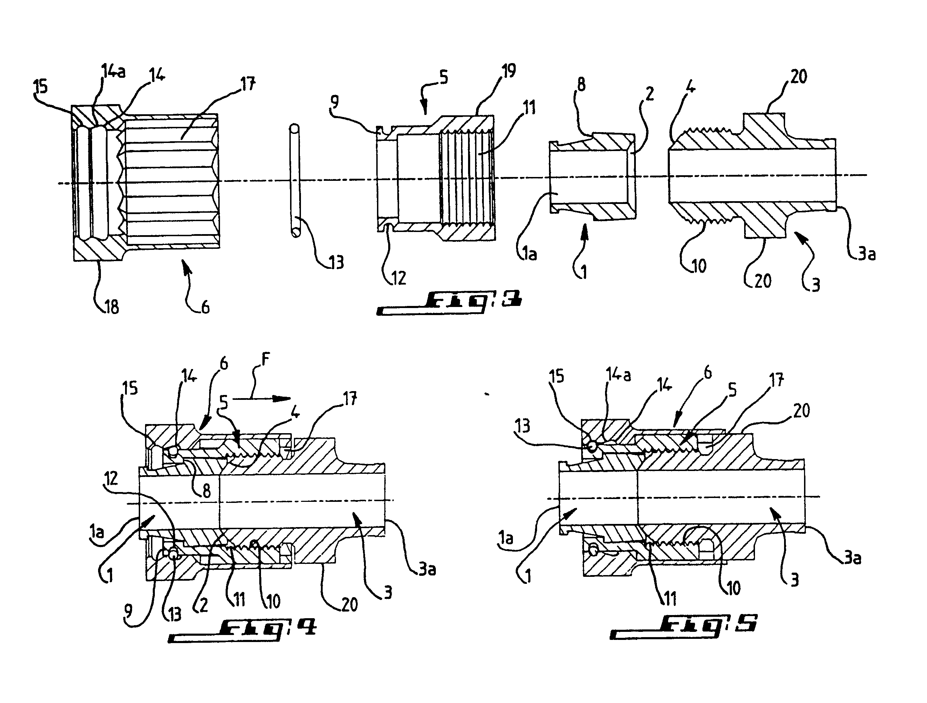

La douille 6 comporte intérieurement et au voisinage de l'une de ses extrémités deux gorges successives 14, 15 susceptibles de coopérer avec le jonc 13 comme on le voit sur les figures 4 et 5, et comme cela sera décrit plus en détail ultérieurement à propos du fonctionnement.

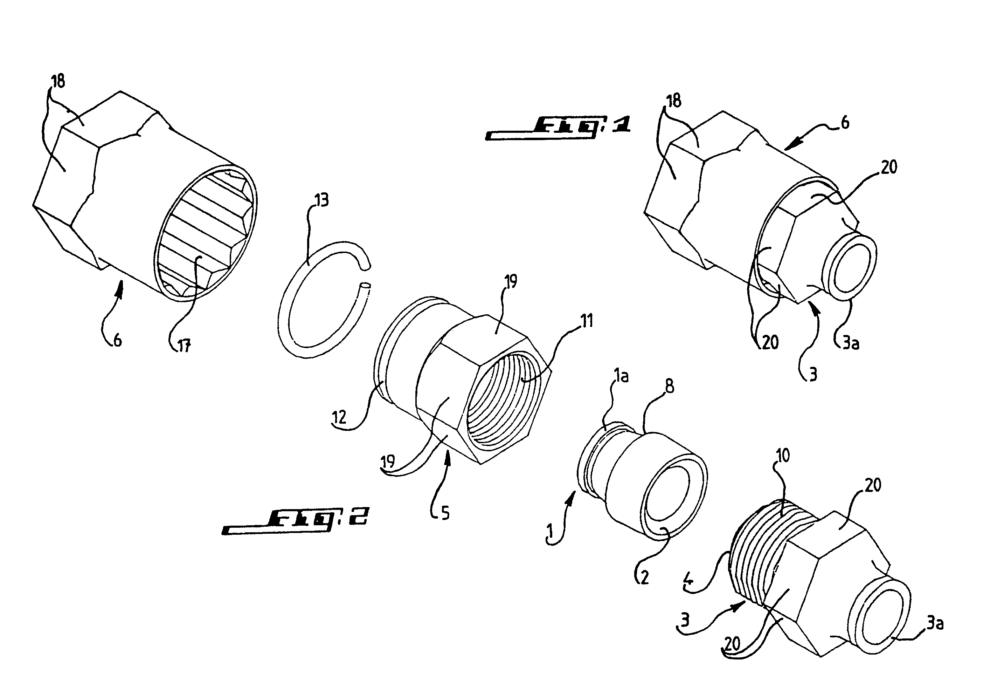

L'une de ces deux gorges, à savoir la gorge 14 comporte une partie formant rampe 14a que l'on voit bien sur la figure 3 et facilitant le passage du jonc 13 dans l'autre gorge 15 sous l'effet du coulissement axial de la douille 6 sur le manchon 5, comme on peut le comprendre en considérant successivement les figures 4 et 5.

La douille 6 comporte une denture interne repérée en 17 et présente, suivant l'exemple de réalisation représenté, la forme générale d'un embout de clé double hexagone. On a montré en 18 des pans, qui sont par exemple au nombre de six, qui sont prévus sur la périphérie externe de la douille 6 et qui permettent, à l'aide d'un outil approprié, d'effectuer la rotation de la douille 6, et donc la rotation et le vissage du manchon 5 sur la pièce 3. En effet, la denture interne 17 de la douille 6 viendra automatiquement en prise sur des pans 19 prévus sur la périphérie externe du manchon 5.

On observera également ici que la pièce 3 comporte extérieurement, et elle aussi, des pans repérés en 20, ces pans faisant suite au filetage 10 de ladite pièce 3.

La mise en oeuvre et le fonctionnement du raccord qui vient d'être décrit seront expliqués ci-après en se reportant plus particulièrement aux figures 4 et 5.

La première pièce 1 est tout d'abord introduite dans le manchon 5 qui comporte le jonc 13, étant entendu que l'une des portions de conduite à raccorder sera fixée par soudage par exemple sur l'extrémité 1a de la pièce 1.

Ensuite, la pièce 3 est vissée par son filetage 10 dans le manchon 5, et cela par coopération du filetage 10 avec le filetage 11.

Le vissage du manchon 5 est effectué par la rotation de la douille 6 dont la gorge 14 est en prise avec le jonc 13, comme on le voit bien sur la figure 4, et cela jusqu'à ce que les extrémités concave 2 et convexe 4 des deux pièces 1 et 3 respectivement viennent en butée et soient correctement serrées l'une contre l'autre.

Cela étant fait, on fait subir à la douille 6 une translation suivant la flèche F, de sorte que le jonc 13, grâce à la partie en forme de rampe 14a, va échapper à la gorge 14 pour passer dans la gorge 15, comme on le voit bien sur la figure 5.

Il est important de remarquer ici que la douille 6 possède une longueur telle qu'après translation et coulissement axial sur le manchon 5, elle vient coiffer la pièce 3, comme on le voit bien encore sur la figure 5. Plus précisément, la denture interne 17, en double hexagone ou autre, de la douille 6 vient automatiquement en prise avec les pans 20 de la pièce 3, de sorte que finalement, la douille 6 assure le blocage en rotation de la pièce 3 et du manchon 5 puisque, encore une fois, la denture interne 17 de la douille 6 viendra en prise avec les pans 19 et 20 du manchon 5 et de la pièce 3 respectivement.

On a donc réalisé suivant l'invention un raccord perfectionné dont l'étanchéité ne risque pas d'être altérée, puisque le blocage en rotation de la pièce 3, demeurant en appui contre la pièce 1, et du manchon 5 est assuré par la douille 6 qui possède une double fonction, à savoir une fonction de manoeuvre par rotation pour effectuer le vissage du manchon 5 sur la pièce 3, et une fonction de blocage en rotation dudit manchon et de la pièce 3, après translation axiale de la douille 6 comme expliqué précédemment.

Bien entendu, l'invention n'est nullement limitée au mode de réalisation décrit et illustré qui n'a été donné qu'à titre d'exemple.

C'est ainsi que la denture interne de la douille pourrait présenter une configuration différente de celle en double hexagone représentée. De même, les pans prévus sur la périphérie externe du manchon 5 et de la pièce 3 pourraient revêtir une forme autre que celle représentée et apte à coopérer avec la denture interne de la douille.

C'est dire que l'invention comprend tous les équivalents techniques des moyens décrits ainsi que leurs combinaisons si celles-ci sont effectuées suivant son esprit.

## Revendications

1. Raccord étanche perfectionné pour conduites de transport d'un fluide quelconque, et du type comprenant deux pièces (1, 3) à extrémités coopérantes conjuguées respectivement convexe (4) et concave (2), et réunies par un manchon (5) intérieurement fileté (11) retenant l'une (1) des pièces et serré par vissage sur l'autre pièce (3) caractérisé en ce que ledit manchon (5) est vissé et serré sur l'autre pièce (3), au moyen d'une douille (6) extérieurement concentrique au manchon (5) et comportant une denture ou analogue interne (17) coopérant avec la périphérie externe du manchon (5), cette douille possédant une longueur telle qu'après vissage du manchon (5) et coulissement axial de ladite douille sur le manchon, elle coiffe et vient en prise par sa denture interne (17) sur la périphérie externe de ladite autre pièce (3) pour bloquer en rotation cette autre pièce en même temps que le manchon (5).

2. Raccord selon la revendication 1, caractérisé en ce que la périphérie externe du manchon (5) et de l'autre pièce précitée (3) comporte des pans (19, 20), susceptibles de coopérer avec la denture interne (17) de la douille (6).

3. Raccord selon la revendication 1 ou 2, caractérisé en ce que la périphérie externe du manchon (5) comporte une gorge (12) recevant un jonc ou analogue (13) coopérant avec l'une ou l'autre de deux gorges (14, 15), ménagées dans la périphérie interne de la douille (6).

4. Raccord selon la revendication 3, caractérisé en ce que l'une (14) des deux gorges (14, 15) ménagées dans la périphérie interne de la douille (6) comporte une partie formant rampe (14a) facilitant le passage du jonc (13) dans l'autre gorge (15) lors du coulissement axial de la douille (6) sur le manchon (5).

5. Raccord selon l'une des revendications 1 à 4, caractérisé en ce que la douille précitée (6) présente la forme d'un embout de clé double hexagone.

Fig.1

Fig.2

EP 0 441 683 A1

Office européen
des brevets

# RAPPORT DE RECHERCHE EUROPEENNE

Numero de la demande

EP    91 40 0221

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | GB-A-624386 (NAPIER & SON) <br> * figure 1 * <br> --- | 1-3, 5 | F16L19/00 |
| A | FR-A-917287 (BORGY) <br> * figures 1, 5 * <br> --- | 1 | |
| A | DE-A-2610878 (BERGER INDUSTRIES) <br> * figures 3-5 * <br> ----- | 4 | |

| | DOMAINES TECHNIQUES RECHERCHES (Int. Cl.5 ) |
|---|---|
| | F16L <br> F16B |

Le présent rapport a été établi pour toutes les revendications

| Lieu de la recherche | Date d'achèvement de la recherche | Examinateur |
|---|---|---|
| BERLIN | 05 AVRIL 1991 | SCHLABBACH M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P0402)